(19) Europäisches Patentamt / European Patent Office / Office européen des brevets

(11) **EP 4 394 693 A1**

(12) **EUROPEAN PATENT APPLICATION**

(43) Date of publication:
**03.07.2024 Bulletin 2024/27**

(21) Application number: **22217219.9**

(22) Date of filing: **29.12.2022**

(51) International Patent Classification (IPC):
**G06T 7/00** (2017.01)　　　**G06T 7/11** (2017.01)
**G06N 3/084** (2023.01)

(52) Cooperative Patent Classification (CPC):
**G06T 7/0004; G06N 3/045; G06T 7/11;**
G06N 3/084; G06T 2207/10004; G06T 2207/10036;
G06T 2207/10048; G06T 2207/20081;
G06T 2207/20084; G06T 2207/30136;
G06T 2207/30156; G06T 2207/30164;
G06V 10/143; G06V 10/58; G06V 10/82

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Leonardo S.p.a.**
**00195 Roma (IT)**

(72) Inventors:
• **CALABRO', Francesco**
**21017 SAMARATE (VA) (IT)**
• **MESSINA, Francesco**
**21017 SAMARATE (VA) (IT)**
• **SANGUINI, Roberto**
**21017 SAMARATE (VA) (IT)**

(74) Representative: **Studio Torta S.p.A.**
**Via Viotti, 9**
**10121 Torino (IT)**

(54) **METHOD AND SYSTEM FOR DETECTING SURFACE DAMAGES TO MECHANICAL COMPONENTS, IN PARTICULAR COMPONENTS OF AIRCRAFT, BY MULTISPECTRAL IMAGE PROCESSING**

(57)　　Method implemented by computer (16) for detecting a damage to a component (1), including: applying (212) a first neural network (40) to at least one multispectral image (25) of the component (1), formed by a plurality of images (30) of the component (1) in corresponding spectral bands, to generate a corresponding mask (62), which includes a respective plurality of pixels, each pixel of the mask (62) being relative to a corresponding portion of the component (1), the first neural network (40) being further such that each pixel of the mask (62) represents a corresponding first-level estimate, which is indicative of a probability that the portion of the component (1) to which the pixel refers is damaged; applying a second neural network (70) to a data structure (65) that is a function of the mask (62), to generate a second-level estimate (999), which is indicative of a probability that the component (1) is damaged; and detecting (228) whether the component (1) is healthy or damaged, based on the second-level estimate (999).

FIG. 5

## Description

### Technical field

The present invention relates to a method and a system for detecting damages to mechanical components, in particular aircraft components, by multispectral image processing.

### Background

As is well known, the need to detect the presence of anomalies (in the sense of damages, also known as deteriorations) of mechanical components of aircraft in order to ensure flight safety is particularly felt in the aviation sector.

Typically, the search for possible anomalies of the components of an aircraft is carried out by highly specialized personnel, who carry out a visual and/or acoustic inspection of the components. In particular, in the case of acoustic inspection, the component under examination is repeatedly struck with a mechanical striker (for example, a hammer), so as to generate an acoustic response to the impact; based on this acoustic response, the person in charge of the inspection can detect the possible presence of an anomaly of the component, such as for example the presence of a detachment or a delamination. The acoustic inspection, also known as "tapping test", therefore requires the presence of trained personnel, provided with a corresponding technical preparation and considerable practical experience; moreover, this procedure cannot be automated and is inevitably subject to uncertainties linked to the skill of the personnel performing it and to human error.

As far as visual inspection is concerned, however, it is also inevitably subject to uncertainties linked to the skill of the personnel performing it and to human error. In this regard, the result of the inspection may easily be distorted by the presence, on the component, of dirt, or by any reflections caused by lighting.

### Summary

Aim of the present invention is therefore to provide a solution which at least partly overcomes the drawbacks of the known art.

According to the present invention there is provided a method and a system for detecting damages as defined in the appended claims.

### Brief description of the Figures

For a better understanding of this invention, some embodiments thereof will now be disclosed, for merely illustrative and non-limiting purposes, with reference to the enclosed drawings, wherein:

- Figure 1 shows a block diagram of an anomaly detection system;
- Figures 2, 5, 11, 16, 17 and 19 show flowcharts according to the present method;
- Figure 3 shows images of a component acquired in different spectral bands;
- Figure 4 shows a three-dimensional multispectral and a two-dimensional mask image;
- Figure 6 shows an image of the component acquired in the absence of illumination;
- Figure 7 shows images of a sample acquired in different spectral bands;
- Figure 8 shows block diagrams of portions of a first and a second neural network;
- Figure 9 shows a block diagram of data structures generated by execution of a first and a second neural network;
- Figure 10 shows a block diagram of data structures generated by execution of a first and a second neural network, during a training step;
- Figures 12 and 13 show two images in the visible band;
- Figure 14 shows a binary image deriving from the image shown in Figure 12;
- Figure 15 shows a smoothed image deriving from the binary image shown in Figure 14; and
- Figure 18 schematically shows a two-dimensional mask, a three-dimensional matrix and a vector.

### Description of embodiments

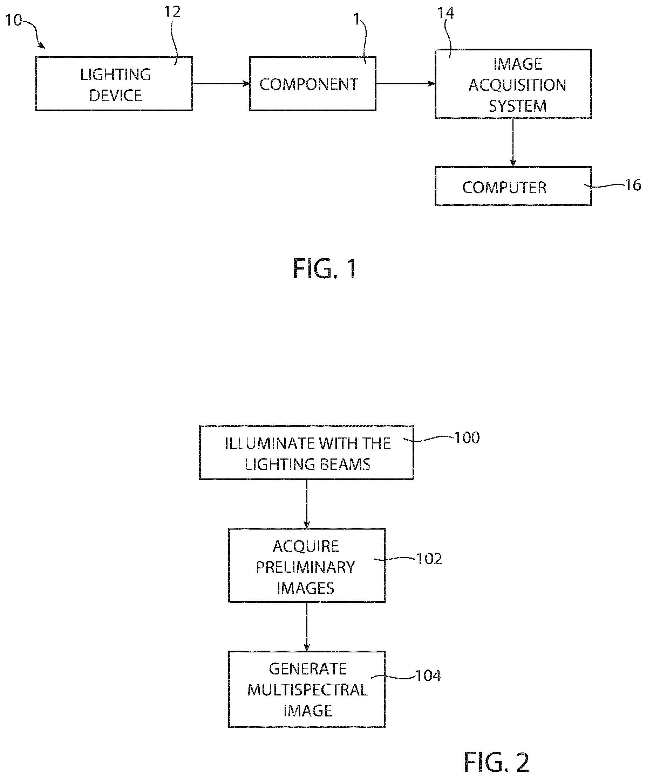

The present method for detecting damages to a component of an aircraft is described, by way of example, with reference to a detection system 10 shown in Figure 1, which is shown as operating, for example, on a component 1, of which it is not known a priori whether it is healthy or damaged. In particular, the detection system 10 comprises a lighting device 12, an image acquisition device 14 and a computer 16.

The lighting device 12 is controllable so as to illuminate the component 1 with a plurality of radiations having respective spectral bands, hereinafter referred to as lighting beams. In particular, the lighting beams are in a number equal to NUM_BW; by way of example only, in the following it is assumed NUM_BW=9. The spectral bands may have amplitude for example equal to 20nm and extend in respective ranges which are centred for example around the values: 720nm, 655nm, 614nm, 585nm, 520nm, 490nm, 465nm, 440nm and 420nm.

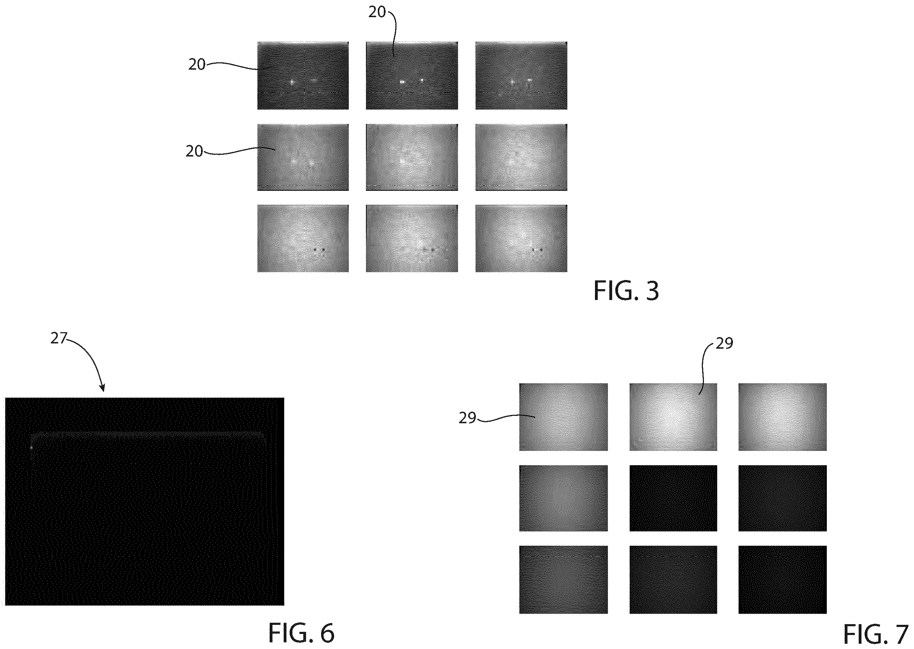

In particular, as shown in Figure 2, for each lighting beam, the lighting device 12 illuminates (block 100) the component 1 by means of the lighting beam, while the image acquisition device 14 acquires (block 102) a corresponding image of the component 1, illuminated by the lighting beam; this image is therefore an image that refers to a single spectral band and is sent from the image acquisition device 14 to the computer 16. In this way, the computer 16 acquires the nine images of the component, as shown in Figure 3, wherein the images are denoted with 20; moreover, in the following reference is made to the images 20 as to the preliminary images 20.

In greater detail, the lighting device 12 and the image acquisition device 14 may be controlled by the computer 16, in order to time the illumination of the component 1 with the acquisition of the preliminary images 20, in a manner known per se.

Each of the preliminary images 20 is formed by a respective matrix of pixels; for example, the nine preliminary images 20 are assumed to have dimensions equal to NxM (e.g., N=1200 and M=1920). Furthermore, the pixels of each preliminary image 20 are indicative of corresponding light intensity values in the spectral band to which the preliminary image 20 refers.

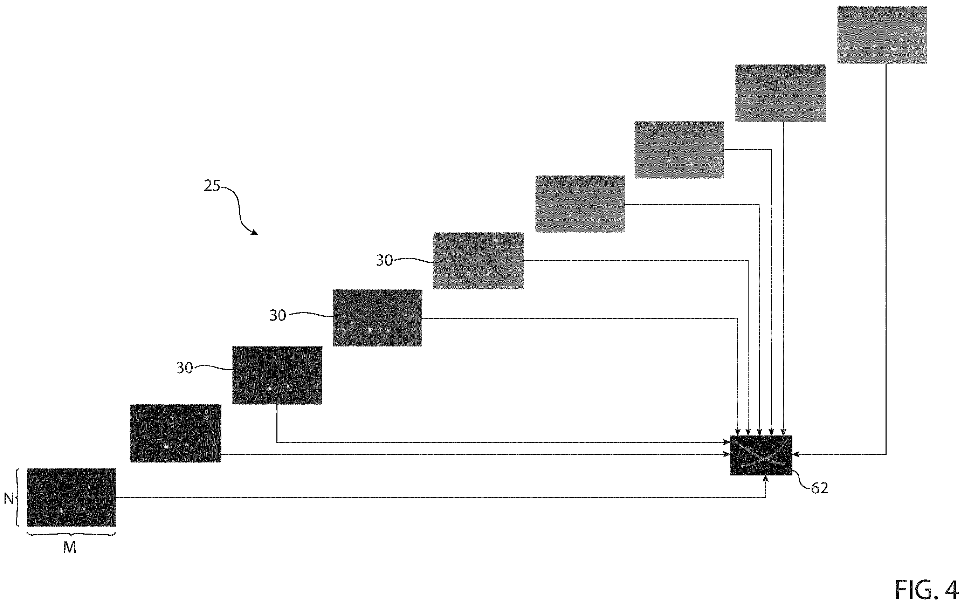

Subsequently, the computer 16 generates (block 104, Figure 2) a multispectral image 25 (an example shown in Figure 4), based on the nine preliminary images 20.

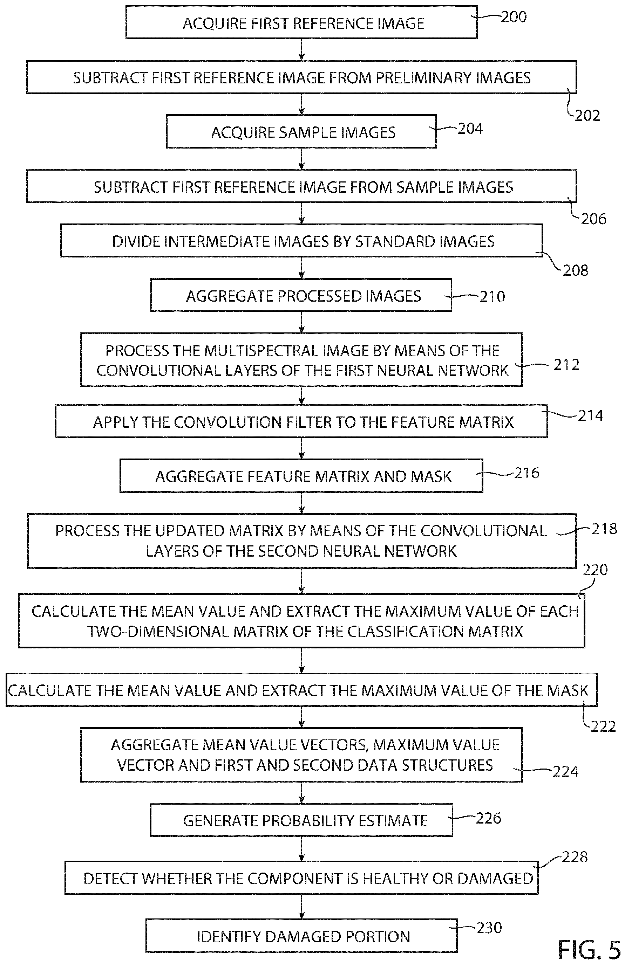

For example, in order to generate the multispectral image 25, the computer 16 may control the lighting device 12 and the image acquisition device 14 to perform the operations shown in Figure 5.

In detail, the computer 16 switches off the lighting device 12 and controls the image acquisition device 14 so as to acquire (block 200, Figure 5) a first reference image 27 (an example shown in Figure 6) of the component 1.

The first reference image 27 is therefore an image of the component 1 obtained when the lighting device 12 is switched off, thus depending on any spurious radiation coming from the environment in which the component 1 is arranged. In this regard, in the present description it is assumed that the component 1 maintains a same arrangement with respect to the lighting device 12 and the image acquisition device 14; consequently, the arrangement that the component 1 has during the acquisition of the first reference image 27 is the same as the one the component 1 has during the acquisition of the nine preliminary images 20.

Subsequently, the computer 16 subtracts (block 202, Figure 5) from each preliminary image 20 the first reference image 27, so as to generate a corresponding intermediate image (not shown), which refers to the same spectral band of the corresponding preliminary image 20.

Thereafter, the computer 16 controls the lighting device 12 and the image acquisition device 14 so as to acquire (block 204, Fig. 5) nine images 29 (shown in Fig. 7) of a reference sample (not shown), hereinafter referred to as the sample images 29. For example, the sample is formed by a flat surface with high reflectivity (e.g., greater than 990) in all spectral bands.

In greater detail, each sample image 29 refers to a corresponding spectral band.

Subsequently, the computer 16 subtracts (block 206, Figure 5) from each sample image 29 the first reference image 27, so as to generate a corresponding image (not shown), hereinafter referred to as the standard image; each standard image refers to the same spectral band of the corresponding sample image 29.

Subsequently, the computer 29 divides (block 208, Figure 5) each intermediate image by the corresponding standard image, so as to generate a corresponding processed image 30 (nine shown in Figure 4), which refers to the same spectral band to which the intermediate image and the standard image refer. In this way nine processed images 30 are obtained, each of which refers to a corresponding spectral band. In greater detail, considering any processed image 30, the light intensity of each pixel of the processed image 30 is equal to the ratio of the light intensity of the corresponding pixel of the corresponding intermediate image to the light intensity of the corresponding pixel of the corresponding standard image.

Subsequently, the computer 16 aggregates (block 210, Figure 5) the nine processed images 30, so as to form the aforementioned multispectral image 25.

For example, the aggregation occurs such that the multispectral image 25 is a three-dimensional matrix of pixels having dimensions 9xNxM. In other words, by indexing with k,i,j the three dimensions of the multispectral image 25, the pixels of the multispectral image 25 can be indicated by the notation $MS[k,i,j]$; moreover, if $k=k^*$ (with $k^*$ equal to any integer between 1 and 9), $MS[k^*,i,j]$ is equal to the $k^*$-th processed image 30. In addition, assuming $k=1, ..., 9$, $i=i^*$ and $j=j^*$ (with $i^*$ an integer in the range [1-1200] and $j^*$ an integer in the range [1-1920]), the nine pixels $M[k,i^*,j^*]$ refer to the same portion of the component 1.

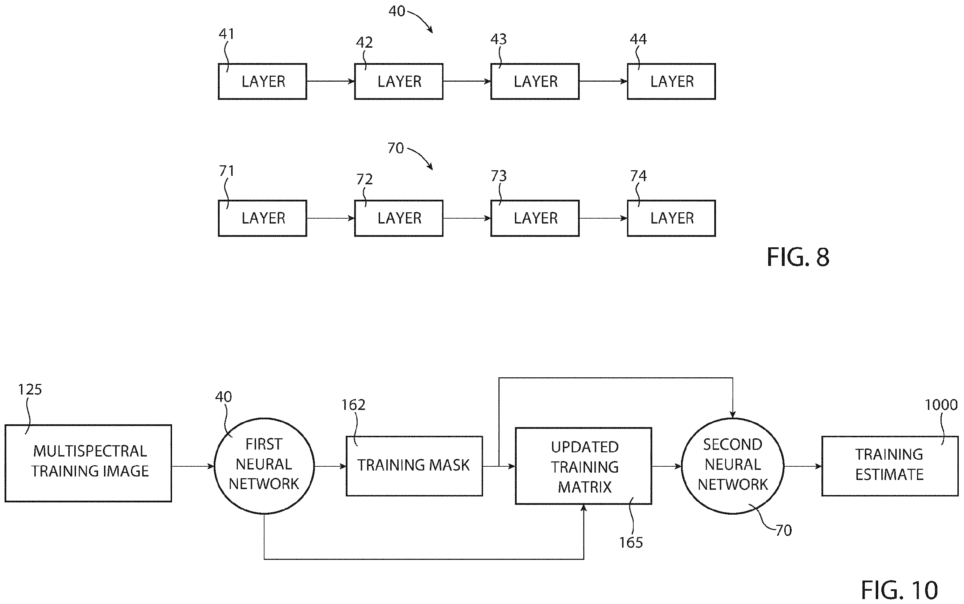

Subsequently, the computer 16 applies to the multispectral image 25 a first neural network 40, which is a convolutional neural network and, as shown qualitatively and by way of example only in Figure 8, comprises a sequence of a plurality of convolutional layers; without losing any generality, in the example shown in Figure 8 there are a first, second, third and fourth convolutional layers 41, 42, 43, 44, connected in sequence.

In a manner known per se, each of the first, second, third and fourth hidden layers 41-44 provides for the execution of: one or more convolution operations, based on a number of respective filters, each convolution operation being followed by an activation operation and by an optional normalization operation; and pooling operations (optional).

In practice, the multispectral image 25 is processed (block 212, Figure 5) by the sequence of the first, second, third and fourth convolutional layers 41-44 of the first neural network 40. To this end, the multispectral image 25 is provided in input to the first convolutional layer 41 of the first neural network 40.

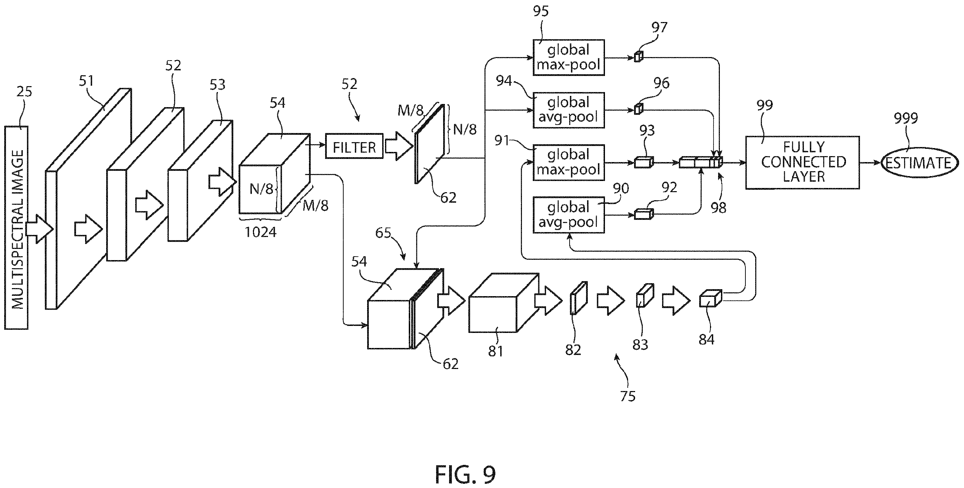

As shown qualitatively in Figure 9, the execution of the operations of each of the first, second, third and fourth convolutional layers 41-44 of the first neural network 40 leads to the generation of a corresponding three-dimensional matrix of numerical elements, which in Figure 9 are respectively denoted with 51, 52, 53 and 54.

In particular, referring to the feature matrix 54 to indicate the three-dimensional matrix generated by the fourth convolutional layer 44 of the first neural network 40, it has for example dimensions equal to $1024\times(N/8)\times(M/8)$, in the hypothesis in which the fourth convolutional layer 44 has a number of respective filters equal to 1024.

The first neural network 40 further comprises a convolution filter 55 (shown in Figure 9), which has a dimension 1x1. Consequently, the computer 16 applies (block 214, Figure 5) to the feature matrix 54 the convolution filter 55, so as to obtain a two-dimensional matrix 62 (shown for example both in Figure 4 and, in a simplified way, in Figure 9), which has dimensions for example equal to (N/8)x(M/8). Hereinafter, the two-dimensional matrix 62 is referred to as the mask 62.

In detail, the first neural network 40 is such that each pixel of the mask 62 refers to a corresponding portion of the component 1, i.e. refers to a corresponding portion of the multispectral image 25, understood as a corresponding subset of pixels of the multispectral image 25, said subset of pixels including the pixels relative to said portion of the component 1 of each of the nine processed images 30, which in turn correspond to the corresponding pixels of the nine preliminary images 20, since there is a bi-unique relationship between each pixel of each processed image 30 and the corresponding pixel of the corresponding preliminary image 20.

In particular, referring to MASK[J,K] for indicating the pixel of the mask 62 having coordinates J and K, such pixel from the mask 62 may refer to the group of pixels MS[i,j,k], with i=1, 2, ..., 9, j=J, J+1,...J+7 and j=K, K+1, ...K+7, as shown qualitatively in Figure 4 with reference to the pixel MASK[1,1]. In other words, in this case each pixel of the mask 62 refers to a corresponding portion of the component 1 which is represented, in each of the processed images 30 of the multispectral image 25, by a corresponding group of sixty-four pixels.

In addition, the pixels of the mask 62 have values ranging between zero and one. In particular, the value of each pixel of the mask 62 is an estimate of the probability that the portion of the component 1 to which that pixel refers is healthy or has a damaging. In other words, the mask 62 represents a segmentation of the multispectral image 25, as estimated by the first neural network 40.

Thereafter, the computer 16 aggregates (block 216, Figure 5) the feature matrix 54 and the mask 62, so as to generate an updated matrix 65, shown by way of example in Figure 9. In practice, by observing that the feature matrix 54 is formed by a number NUM of two-dimensional matrices (in the example, it is assumed NUM=1024) having the same dimensions as the mask 62, the updated matrix 65 comprises i) the same two-dimensional matrices as the feature matrix 54 (in number equal to NUM), and further comprises, as NUM +1-th two-dimensional matrix, the mask 62.

Subsequently, the computer 16 applies to the updated matrix 65 a second neural network 70, which forms, together with the first neural network 40, a third neural network 75.

As shown qualitatively and by way of example only in Figure 8, the second neural network 70 comprises a respective sequence of a plurality of convolutional layers; without losing any generality, in the example shown in Figure 8 there are a first, second, third and fourth convolutional layers 71, 72, 73, 74, connected in sequence.

In a manner known per se, each of the first, second, third and fourth convolutional layers 71-74 provides for the execution of: a number of convolution operations, based on a number of respective filters, each convolution operation being followed by an activation operation and by an optional normalization operation; and pooling operations (optional).

In practice, the updated matrix 65 is processed (block 218, Figure 5) by the sequence of the first, second, third and fourth convolutional layers 71-74 of the second neural network 70. To this end, the updated matrix 65 is provided in input to the first convolutional layer 71 of the second neural network 70.

As shown qualitatively in Figure 9, the execution of the operations of each of the first, second, third and fourth convolutional layers 71-74 of the second neural network 70 leads to the generation of a corresponding three-dimensional matrix of numerical elements, which in Figure 9 are respectively denoted with 81, 82, 83 and 84.

In particular, referring to the classification matrix 84 to indicate the three-dimensional matrix generated by the fourth convolutional layer 74 of the second neural network 70, it has for example dimensions equal to 32x10x10, in the hypothesis in which the fourth convolutional layer 74 has a number of respective filters equal to thirty-two. In other words, in this example, the classification matrix 84 is formed by thirty-two two-dimensional matrices having dimensions 10x10.

The second neural network 70 further provides that, for each two-dimensional matrix of the classification matrix 84, the mean value of the relative pixels is calculated and the maximum value between the pixels of the two-dimensional matrix is extracted (block 220, Figure 5). In Figure 9, such operations of calculating the mean value and of extracting the maximum value are indicated respectively with the blocks 90 and 91, which form a pooling step. In addition, these operations lead to the generation of a mean value vector (denoted with 92 in Figure 9) and a maximum value vector (denoted with 93 in Figure 9); both the mean value vector and the maximum value vector have thirty-two elements.

The second neural network 70 further provides for the mean value of the pixels of the mask 62 to be calculated and the maximum value among the pixels of the mask 62 to be extracted (block 222, Figure 5). In Figure 9, such operations of calculating the mean value and of extracting the maximum value of the mask 62 are denoted respectively with blocks 94 and 95, which form a further pooling step. Furthermore, such operations lead to the generation of a first data structure 96, which stores the mean value of the mask 62, and of a second data structure 97, which stores the maximum value of the mask 62.

The second neural network 70 further provides that the mean value vector 92, the maximum value vector 93 and the first and second first data structures 96, 97 are aggregated (block 224, Figure 5), so as to form a macrovector 98 (shown in Figure 9), which in the present example is formed by a number of elements equal to sixty-six.

The second neural network 70 further provides to supply the macrovector 98 to a fully connected layer 99 (shown in Figure 9), which has a number of input nodes (not shown) equal to sixty-six and an output node, which generates (block 226 of Figure 5) an estimate 999 of the probability that the component 1 is damaged.

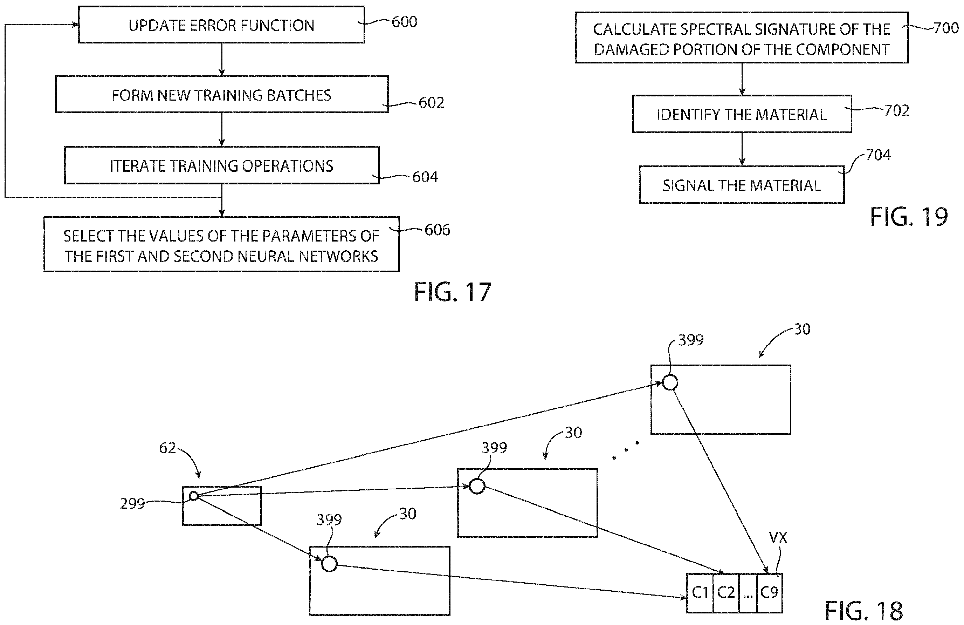

Based on the estimate 999, the computer 16 detects (block 228, Figure 5) if the component 1 is healthy or damaged. For example, the calculator 16 detects the presence of a damage, if the estimate 999 is greater than or equal to a first threshold, whereas it detects that the component 1 is healthy if the estimate 999 is lower than the first threshold. Furthermore, in the event that the computer 16 has detected the presence of a damage, the computer 16 identifies (block 230, Figure 5) the damaged portion of the component 1, based on the mask 62; to this end, the computer 16 identifies as damaged portion of the component 1 the set of the portions of the component 1 that correspond to pixels of the mask 62 having values higher than a second threshold. For example, Figure 18 shows a further example of the mask 62, in which a damaged zone 299 is highlighted, which is formed by pixels of the mask 62 exceeding the second threshold and thus corresponds to the damaged portion of the component 1; although in such an example the damaged zone 299 is formed by a single set of adjacent pixels, it is possible that the damaged zone 299 includes multiple damaged sub-zones, each of which is formed by a corresponding set of adjacent pixels of the mask 62, the damaged sub-zones being separated from each other. In Figure 18 it is furthermore highlighted the correspondence between the damaged zone 299 and the damaged portion of the component 1, which is represented, in each of the processed images 30 of the multispectral image 25, by a corresponding set of pixels, denoted with 399, i.e. by a corresponding sub-portion of the processed image 30. In the following reference is made to the sets of pixels 399 as the single band representation 399 of the damaged zone 299. In the case (not shown) where the damaged zone 299 includes multiple separate sets of pixels, each single band representation 399 is also formed by multiple separate sets of pixels.

In order to optimize performance, the first and second neural networks 40, 70 may be trained in the following manner, which assumes having a plurality of multispectral training images 125 (one shown schematically in Figure 10), each of which refers to a respective training component (not shown), not necessarily equal to the component 1, and is formed by a three-dimensional matrix having dimensions 9xNxM.

In greater detail, each training multispectral image 125 is generated in the same manner as described with reference to the multispectral image 25 and refers to a component of an aircraft which may be of the same type as the aforementioned component 1 or may be a different component; moreover, the component to which each training multispectral image 125 refers may be healthy or may have one or more damaged portions. In addition, by indicating with TM the matrix of pixels of a generic multispectral training image 125 and assuming $k=1, ..., 9$, $i=i^*$ and $j=j^*$ (with $i^*$ an integer in the range [1-1200] and $j^*$ an integer in the range [1-1920]), the nine pixels $TM[k,i^*,j^*]$ refer to a same portion of the training component to which the multispectral training image 125 refers.

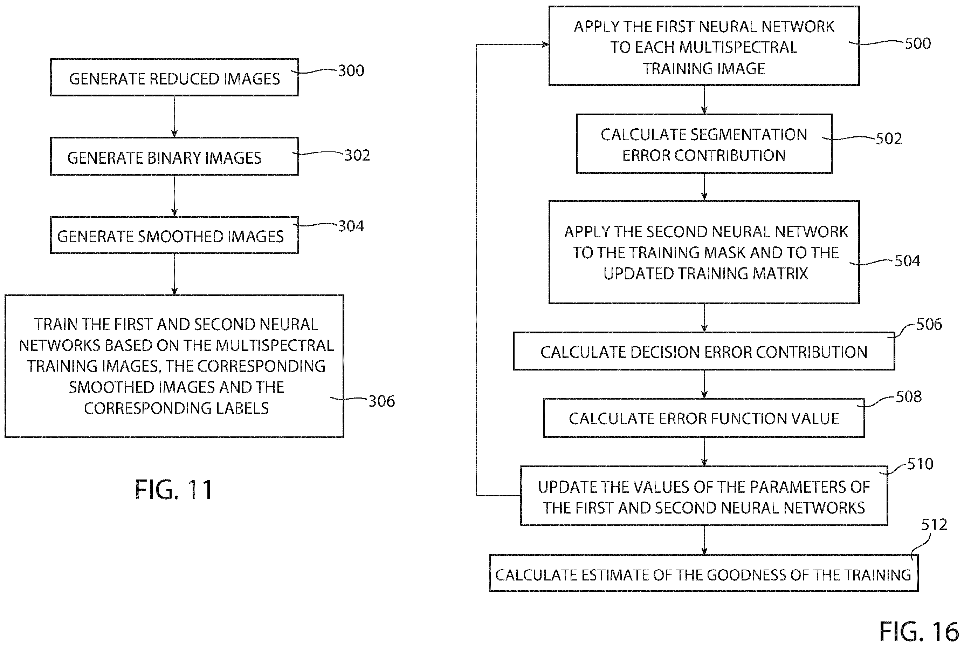

In detail, the multispectral training images 125 are divided in an arbitrary manner in order to form respectively a training set and a validation set. Next, the operations shown in Figure 11 are performed.

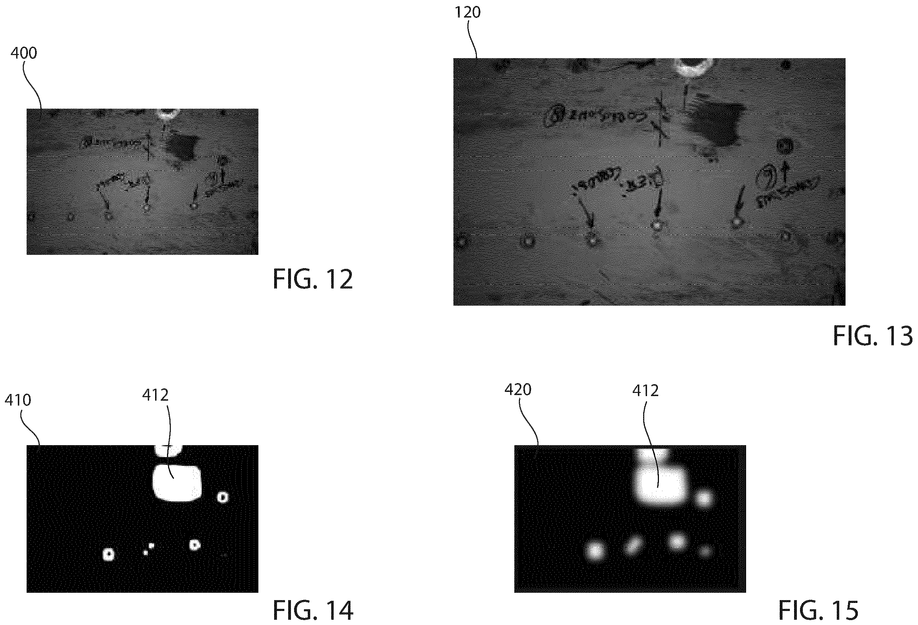

For each training multispectral image 125 of the training set, the computer 16 generates (block 300 of Figure 11) a corresponding reduced image 400. An example of a reduced image 400 is shown in Figure 12; by way of example only, the reduced image 400 shown in Figure 12 refers to a training component whose preliminary image (denoted with 120) in the band centred on 490nm, which is part of the respective multispectral image 125, is shown in Figure 13.

In greater detail, the reduced image 400 is obtained for example by performing down-sizing operations known per se, so that the reduced image 400 has the same dimensions as the mask 62 (in the present example $N/8 \times M/8$). For example, by indicating with $RED[i,j]$ the matrix of pixels of the reduced image 400 and by indicating with $VIS[i,j]$ the matrix of pixels of the preliminary image 120, it is possible that the reduced image 400 is obtained by a so-called resizing based on a bilinear interpolation of the preliminary image 120. Thus, the reduced image 400 is a smaller version of the preliminary image 120 and remains intelligible to an observer. In this regard, the fact that the preliminary image 120 is in the band centred on 490nm is irrelevant; the preliminary image 120 may be in any one of the nine spectral bands.

Thereafter, the computer 16 is commanded by a user so as to generate (block 302 of Figure 11), starting from each reduced image 400, a corresponding binary image 410, which has the same dimensions as the reduced image 400 (an example shown in Figure 14). In particular, each pixel of the binary image 410 is alternatively equal to '0' or '1', depending on whether the pixel of the binary image 410 refers to a respectively healthy or damaged portion of the training component.

In greater detail, as visible in Figure 14, an observer may control the computer 16 so as to assign to sets of adjacent pixels of the binary image 410 the value '1', if the observer believes that such sets of pixels refer to damaged portions of the training component, the remaining pixels of the binary image 410 being set equal to '0'. In this way, if the training component is damaged, the binary image 410 has one or more damaged zones 412 (one indicated in Figure 14), i.e., groups of adjacent pixels with a value equal to '1', hereinafter referred to as the damaged training zones 412. The edges of each damaged training zone 412 are sharp, i.e. they are characterized by a transition from '1' to '0' between adjacent pixels.

Subsequently, starting from each binary image 410, the computer 16 generates (block 304 of Figure 11) a corresponding smoothed image 420, an example of which, relative to the binary image 410 shown in Figure 14, is shown in Figure 15.

In detail, for each binary image 410, the corresponding smoothed image 420 is the same as the binary image 410, if it is free of damaged training zones 412. Instead, if the binary image 410 comprises at least one damaged training zone 412, the computer 16 performs the following operations: processes the binary image 410 so as to enlarge the extension of each damaged training zone 412 (optional operation); and subsequently applies a Gaussian filter (e.g. having dimensions 7x7) to the previously processed binary image 410.

For example, in order to enlarge the extension of each damaged training zone 412, the computer 16 may modify the arrangement of the relative edge, for example by setting equal to '1' the pixels of the binary image 410 that were previously equal to '0' and that are distant from the edge by a distance (measured according to a predetermined metric) not exceeding a distance threshold. For example, for a generic pixel, the distance may be calculated as the number of adjacent pixels defining the shortest path that connects the pixel with any pixel of the edge of the damaged training zone 412. For the purposes of this method, the processing operation to increase the extension of each damaged training zone 412 and the relative details are irrelevant. The Gaussian filtering operation may thus also be applied directly to the binary image 410. The same Gaussian filtering operation, which allows to minimize any labelling errors (i.e., assignment errors of the value '0' or of the value '1') at the edges of the damaged training zones 412, is however optional; variants are therefore possible in which, instead of the smoothed images 420, the binary images 410 are used. In addition, regardless of the possible enlargement of the damaged training zones 412 and/or the application of the Gaussian filter, it is possible that the binary images 410 are obtained starting from the corresponding preliminary images 120, instead of the corresponding reduced images 400, and subsequently are subjected to a downsizing operation, so as to assume the same dimensions as the masks 62.

Next, the first neural network 40 and the second neural network 70 are trained in a supervised manner.

In particular, the computer 16 trains (block 306, Figure 11) the first and second neural networks 40 based on the training multispectral images 125, the corresponding smoothed images 420 and respective labels, which are alternatively equal to zero, if the smoothed image 420 is free of damaged zones, or it is equal to one, if the smoothed image 420 has at least one damaged zone.

In greater detail, the training of the first and second neural networks 40, 70 may take place as described below and as shown in Figure 16. In particular, in a manner known per se, the training multispectral images 125 of the training set are subdivided into a set of training batches; such set of training batches forms an epoch; moreover, the operations performed for each training multispectral image 125 of each training batch are described below, unless otherwise specified, although such operations are performed for all training multispectral images 125 of the training batch.

The computer 16 initializes in a manner known per se the values of the parameters of the first and second neural networks 40, 70 and subsequently applies (block 500, Figure 16) the first neural network 40 to the multispectral training image 125, so as to obtain a corresponding mask, referred to as the training mask 162 (one schematically shown in Figure 10). Furthermore, the computer 16 calculates (block 502, Figure 16) a corresponding error contribution, as a function of the difference between the training mask 162 and the corresponding smoothed image 420, which acts as a labelled training mask; in the following this error contribution is referred to as the segmentation error contribution. For example, the segmentation error contribution may be equal to the so-called focal loss calculated based on the smoothed image 420 and on the training mask 162; the adoption of a different metric is however possible.

Subsequently, the computer 16 aggregates the training mask 162 with the feature matrix (not shown) provided by the first neural network 40 following application of the latter to the multispectral training image 125, in the same manner described with reference to block 216 of Figure 5, in order to obtain a corresponding updated matrix, referred to as the updated training matrix 165 (one shown in Figure 10). In addition, the computer applies (block 504, Figure 16) the second neural network 70 to the training mask 162 and to the updated training matrix 165, so as to obtain a corresponding estimate 1000 (shown in Figure 10) of the probability that the training component to which the training multispectral image 125 refers is damaged. Below reference is made to the estimate 1000 as the training estimate 1000.

In a manner known per se, the computer 16 calculates (block 506, Figure 16) a further error contribution, as a function of the difference between the training estimate 1000 and the label relative to the multispectral training image 125. Below reference is made to this further error contribution as the decision error contribution. For example, the decision error contribution may be directly proportional to the difference between the aforementioned label and the training estimate 1000.

Based on the decision error contributions and on the segmentation error contributions obtained for all training multispectral images 125 of the training batch, the computer 16 calculates (block 508, Figure 16) the value of an error function, described in greater detail below, and subsequently updates (block 510, Figure 16) the values of the parameters of the first and second neural networks 40, 70, as a function of the value of the error function.

For example, in a manner known per se, updating the values of the parameters of the first and second neural networks 40, 70 may envisage calculating the gradient of the error function with respect to each parameter and subsequently updating the value of each parameter based on the corresponding gradient.

As shown qualitatively in Figure 16, the computer may then iterate the operations referred to in blocks 500-510 for the multispectral training images 125 of the next training batch. Once the training batches are finished, the computer 16 calculates (block 512, Figure 16) an estimate of the goodness of the training, for example based on the multispectral images 125 of the aforementioned validation set, of the updated values of the parameters of the first and second neural networks 40, 70 and of a predetermined metric.

Subsequently, as shown in Figure 17, once the training batches are finished, i.e. once the epoch is finished, the computer 16 updates (block 600, Figure 17) the error function, as explained in greater detail below, and reshuffle the multispectral training images 125 of the training set so as to form (block 602, Figure 17) a set of new training batches, which form a new epoch. Subsequently, the computer 16 iterates (block 604) the operations shown in Figure 16, based on the new training batches, at the end of which the computer 16 has updated values of the parameters of the first and second neural networks 40, 70 and of a corresponding estimate of the goodness of training of the first and second neural networks 40, 70.

The operations referred to in blocks 600-604 are iterated a predetermined number of times and subsequently the computer 16 selects (block 606, Figure 17) the values of the parameters of the first and second neural networks 40, 70 that correspond to the best one among the previously calculated training goodness estimates.

In more detail, with regard to the operations of updating the error function referred to in block 600, they may take place as follows.

As described above, the operations at blocks 502, 506, and 508, relative to the calculation of segmentation error contributions, to the calculation of the decision error contributions, and to the calculation of the value of the error function, are iterated for each epoch. Furthermore, the error function updating operations at block 600 are such that the calculation of the value of the error function at block 508 is performed so as to vary, between one epoch and the next, the weights that, within the error function, are assigned to the corresponding segmentation error contributions and to the corresponding decision error contributions.

For example, and without losing any generality, the calculation of the value of the error function mentioned about block 508 may be performed according to the function:

$$F_e(b) = f(CS_b) + (1 - \lambda_e) * f'(CD_b)$$

wherein: the index 'e' indicates the epoch, 'b' indicates a generic training batch of the e-th epoch; $f(CS_b)$ indicates the value of a first predetermined function calculated based on the segmentation error contributions of the b-th training batch; $f'(CD_b)$ indicates the value of a second predetermined function calculated based on the decision error contributions of the b-th training batch; and $\lambda_e$ indicates a parameter, which may for example be initially equal to one and may subsequently be decreased at each epoch during the operations at block 600, so as to gradually increase the weight of the decision error contributions within the calculation of the value of the error function.

In practice, the training described allows to avoid that the training, initially inaccurate, of the first neural network 40 negatively impacts the training of the second neural network 70, since the weight of the decision error contributions increases as the epochs elapse, i.e. as the training of the first neural network 40 improves.

Variants are however possible in which the first and second neural networks 40, 70 are trained separately. In such a case, the first neural network 40 may be trained based on a first partial error function, which depends on the segmentation error contributions only. Once the training of the first neural network 40 is finished, and then once the values of the parameters of the first neural network 40 are established, the second neural network 70 is trained based on a second partial error function, which depends on decision error contributions only; moreover, during the training of the second neural network 70, the values of the parameters of the first neural network 40 do not change.

Regardless of the implementation details relative to the training of the third neural network 75, understood as a set of the first and second neural networks 40, 70, the structure of the third neural network 75 causes the mask 62 provided by the first neural network 40 to provide a spatial indication of the arrangement, in the component 1, of portions that might be damaged, which are the portions of the component 1 relative to pixels of the mask 62 that exceed the aforementioned second threshold; such spatial and potential damaging indication is interpreted by the computer 16 in the light of the corresponding estimate 999, which confirms whether or not the portions of the component 1 indicated by the mask 62 are actually damaged.

In other words, each pixel of the mask 62 represents a corresponding first-level estimate, which is indicative of a probability that the portion of the component 1 to which the pixel refers is damaged, said probability being estimated by the first neural network 40. The estimate 999 generated by the second neural network 70 represents a second-level estimate, which is indicative of a probability that the component 1 is damaged, i.e. has at least a damaged portion, said probability being precisely estimated by the second neural network 70. Accordingly, if the estimate 999 does not exceed the first threshold, the calculator 116 detects that the component 1 is healthy, regardless of the values of the pixels of the mask 62. In this way, the presence of the second neural network 70 allows to reduce the false positives generated by the first neural network 40.

Furthermore, the fact that the mask 62 is provided in input to the second neural network 70 causes the information provided by the mask 62 relative to the portions of the component 1 that might be damaged to be weighed by the second neural network 70 and to thus contribute to the generation of the estimate 999, improving the accuracy of the latter.

According to a variant of the present method, in case the computer 16 has detected, based on the estimate 999, the presence of a damage in the component 1, the computer 16 may perform the operations shown in Figure 19.

In particular, the computer 16 calculates (block 700, Figure 19) a spectral signature of the damaged zone 299, and therefore of the damaged portion of the component 1. To this end, referring for example to the case shown in Figure 18, the computer 12 calculates, for each single band representation 399 of the damaged zone 299 of the mask 62, the corresponding mean of the values of the pixels of the single band representation 399; in the example shown in Figure 18, such means are denoted with C1, C2, C3..., C9. The set of the calculated nine means forms a vector VX, which is referred to as the spectral signature VX of the damaged portion of the component 1.

In practice, the spectral signature VX depends on the reflectivity values in the spectral bands of the material forming the damaged portion of the component 1. Regarding such a material, it may for example be rust or a metallic material (e.g. steel), which, in the absence of damaging, is coated by a paint, but is exposed to the lighting beams due to the damaging (e.g. a scratch) to the component 1.

Subsequently, the computer 16 identifies (block 702, Figure 19) the material of the damaged portion of the component 1, based on the spectral signature VX and a set of known spectral signatures.

In particular, one or more known spectral signatures may have been obtained in the same manner described with reference to spectral signature VX, but relatively to training components with damaged portions formed from known material (e.g., rust or metallic materials). It is also possible that the set of known spectral signatures comprises differently generated spectral signatures; for example, it is possible that the nine values of a known spectral signature of a material (e.g., an oily material or a fat) are obtained by calculating the mean values of the processed images 30 of a sample of such known material.

In practice, from a mathematical point of view, known spectral signatures form a sort of basis for the space of the spectral signatures. Consequently, the operations at block 702 may, for example, envisage carrying out a linear regression of the spectral signature VX, so as to obtain $VX = \alpha_1 * VN_1 + \alpha_2 * VN_2 + ... \alpha_u * VN_u$, wherein 'u' indicates the number of known spectral signatures, which are indicated by $VN_1, VN_2, ... VN_u$, while $\alpha_1, ... \alpha_u$ indicate corresponding coefficients. The calculator 16 may then select, for example, the material relative to the known spectral signature having the highest coefficient $\alpha$ among the coefficients $\alpha_1, ... \alpha_u$.

As still shown in Figure 19, the computer 16 may further signal (block 704, Figure 19) to a user, in a manner known per se, the identified material, to allow further assessments of the actual severity of the damaging by a user. It is also possible that, if the known spectral signatures do not comprise the spectral signature of the material in question, and therefore if the identification at block 702 is not reliable (for example because the coefficients a have approximately equal values to each other), the computer 16 signals this situation, so that further analysis is carried out.

The advantages that this solution allows obtaining emerge clearly from the previous description.

In particular, the present method makes it possible to detect the presence of surface defects of a component, under conditions of uncontrolled light. In addition, the present method has proved effective even in the presence of dirt or paint on the surface of the component.

Still, this system is characterized by low costs and high automation possibilities.

Finally, it is evident that modifications and variations can be made to the method and the system described and shown herein without, however, departing from the scope of the present invention, as defined in the appended Claims.

For example, the number of spectral bands NUM_BW may differ from what described.

The first and second neural networks 40, 70 may be different from those described; for example, they may include a different number of layers. In addition, the first and second neural networks 40, 70 may be trained differently from what described.

In general, the generation of the multispectral images may differ from what described, in which case the generation of the training multispectral images adapts accordingly. It is also possible that the multispectral images are formed directly by the preliminary images, without further processing of the latter, although this may result in a reduction in accuracy.

It is also possible that, in order to reduce the computational complexity, the values of N and M are reduced, in which case it is possible that, for each component to be analysed, it is necessary to acquire multiple multispectral images, which refer to different portions of the component; each multispectral image is however analysed in the same way as described above.

In addition, the order in which some of the above-mentioned operations are performed may differ from what described.

Finally, the present method and the present detection system can also be applied to mechanical components other than the mechanical components of an aircraft; for example, they can be applied for the structural monitoring of a wind turbine or of a civil infrastructure, and more generally for monitoring the health status of any mechanical part.

**Claims**

1. A method implemented by computer (16) for detecting a damage to a component (1), comprising:

   - applying (212) a first neural network (40) to at least one multispectral image (25) of the component (1), formed by a plurality of images (30) of the component (1) in corresponding spectral bands, to generate a corresponding mask (62), which includes a respective plurality of pixels, each pixel of the mask (62) being relative to a corresponding portion of the component (1), the first neural network (40) being further configured such that each pixel of the mask (62) represents a corresponding first-level estimate, which is indicative of a probability that the portion of the component (1) to which the pixel refers is damaged;

   said method further comprising:

   - applying a second neural network (70) to a data structure (65) that is a function of the mask (62), to generate a second-level estimate (999), which is indicative of a probability that the component (1) is damaged; and
   - detecting (228) whether the component (1) is healthy or damaged, based on the second-level estimate (999).

2. The method according to claim 1, wherein applying (212) a first neural network (40) to at least one multispectral image (25) comprises generating a feature matrix (54) starting from the multispectral image (25); and wherein the first neural network (40) is configured such that the mask (62) is a function of the feature matrix (54); and wherein said data structure (65) is a function of the mask (62) and of the feature matrix (54).

3. The method according to claim 2, wherein the first neural network (40) comprises a number of respective convolutional layers (41,42,43,44) sequentially connected and configured to generate the feature matrix (54) starting from the multispectral image (25).

4. The method according to claim 2 or 3, wherein the first neural network (52) comprises a convolutional filter (52) configured to generate the mask (62) starting from the feature matrix (54).

5. The method according to any one of the preceding claims, wherein the second neural network (70) comprises:

   - a convolutional step (71,72,73,74), configured to generate a data matrix (84) as a function of the data structure (65);
   - a first pooling step (90,91) configured to generate a data vector (92,93) starting from the data matrix (84);
   - a second pooling step (94,95) configured to generate at least one numerical value (96,97) starting from the mask (62) ;
   - an aggregation step (98) configured to generate a macrovector (98) by aggregating the data vector (92,93) and said at least one numerical value (96,97); and
   - a fully connected step (99) configured to generate said second-level estimate (999), as a function of the macrovector (98).

6. The method according to any one of the preceding claims, further comprising, if it has been detected (228) that the component (1) is damaged, identifying (230) a damaged portion of the component (1), based on the mask (62).

7. The method according to claim 6 further comprising:

   - determining a damaged zone (299) of the mask (62), which is formed by the pixels of the mask (62) that respect a threshold condition, the damaged zone (299) corresponding, for each image (30) of the component (1), to a corresponding sub-portion (399) of the image (30);
   - calculating (700) a spectral signature of the damaged zone (299), the spectral signature being formed by a corresponding numerical vector (VX) including a value for each image (30), said value being a function of the pixels of the corresponding sub-portion (399) of the image (30); and
   - identifying (702) a material forming the damaged portion of the component (1), among a plurality of known materials, based on the spectral signature (VX) and on a plurality of known spectral signatures, which are relative to said known materials.

8. The method according to claim 7, wherein, for each image (30), the corresponding value of the numerical vector (VX) is equal to the mean of the pixels of the sub-portion (399) of the image (30).

9. The method according to any one of the preceding claims, wherein the first and second neural networks (40,70) have been trained based on multispectral training images (125) relative to training components, based on corresponding labelled training masks (420) and based on corresponding labels, each label indicating if the training component is healthy or damaged.

10. The method according to claim 9, wherein each labelled training mask (420) comprises respective pixels, each of which is relative to a corresponding portion of the corresponding training component and has a value that depends on whether the corresponding portion of the training component is healthy or damaged.

11. The method according to claim 10, wherein each labelled training mask (420) has dimensions equal to the mask (62) and is obtained by performing the operations of:

    - generating (303) a corresponding binary image (410), each pixel being alternatively equal to a first value ('0'), if the corresponding portion of the training component is healthy, or to a second value ('1'), if the corresponding portion of the training component is damaged; and
    - generating the labelled training mask (420) as a function of the binary image (410).

12. The method according to any one of claims 9 to 11, wherein the first and second neural networks (40,70) have respective parameters and have been trained by performing the step of forming (602) a succession of epochs of batches of training multispectral images (125) and, for each batch of each epoch:

    - applying (500) the first neural network (40) to each multispectral training image (125) of the batch, so as to obtain a corresponding training mask (162), and calculating (502) a corresponding segmentation error contribution, as a function of the training mask (162) and of the corresponding labelled training mask (420);
    - for each multispectral training image (125) of the batch, applying (504) the second neural network (70) to a training data structure (165) that is a function of the corresponding training mask (162), so as to generate a second-level training estimate (1000), which is indicative of a probability that the corresponding training component (125) is damaged, and calculating (506) a decision error contribution, as a function of the difference between the second-level training estimate (1000) and the corresponding label;
    - calculating (508) the value of an error function that depends on the decision error contributions and on the segmentation error contributions relative to the batch according to respective weights;
    - updating (510) the values of the parameters of the first and second neural networks (40,70) based on the calculated value of the error function;

and wherein, during the succession of the epochs, the weight of the decision error contributions increases.

13. A processing system comprising means (16) configured to carry out the method according to any one of claims 1 to 12.

14. A system comprising:

    - the processing system (16) according to claim 13;
    - a lighting device (12) configured to illuminate the component (1) with lighting beams having wavelengths ranging, for each lighting beam, in a corresponding spectral band; and
    - an acquisition device (14), coupled to the processing system (16) and configured to acquire preliminary images (20) of the component (1), in corresponding spectral bands, said multispectral image (25) being a function of the preliminary images (20).

15. A computer program comprising instructions which, when the program is executed by a computer (16), cause the execution, by the computer (16), of the method according to any one of claims 1 to 12.

16. A computer medium readable by a computer (16), on which the computer program according to claim 15 is stored.

10

12

LIGHTING
DEVICE

COMPONENT

14

IMAGE
ACQUISITION
SYSTEM

1

COMPUTER 16

## FIG. 1

ILLUMINATE WITH THE
LIGHTING BEAMS 100

ACQUIRE
PRELIMINARY
IMAGES 102

GENERATE
MULTISPECTRAL
IMAGE 104

## FIG. 2

FIG. 3

FIG. 6

FIG. 7

FIG. 4

ACQUIRE FIRST REFERENCE IMAGE — 200

SUBTRACT FIRST REFERENCE IMAGE FROM PRELIMINARY IMAGES — 202

ACQUIRE SAMPLE IMAGES — 204

SUBTRACT FIRST REFERENCE IMAGE FROM SAMPLE IMAGES — 206

DIVIDE INTERMEDIATE IMAGES BY STANDARD IMAGES — 208

AGGREGATE PROCESSED IMAGES — 210

PROCESS THE MULTISPECTRAL IMAGE BY MEANS OF THE CONVOLUTIONAL LAYERS OF THE FIRST NEURAL NETWORK — 212

APPLY THE CONVOLUTION FILTER TO THE FEATURE MATRIX — 214

AGGREGATE FEATURE MATRIX AND MASK — 216

PROCESS THE UPDATED MATRIX BY MEANS OF THE CONVOLUTIONAL LAYERS OF THE SECOND NEURAL NETWORK — 218

CALCULATE THE MEAN VALUE AND EXTRACT THE MAXIMUM VALUE OF EACH TWO-DIMENSIONAL MATRIX OF THE CLASSIFICATION MATRIX — 220

CALCULATE THE MEAN VALUE AND EXTRACT THE MAXIMUM VALUE OF THE MASK — 222

AGGREGATE MEAN VALUE VECTORS, MAXIMUM VALUE VECTOR AND FIRST AND SECOND DATA STRUCTURES — 224

GENERATE PROBABILITY ESTIMATE — 226

DETECT WHETHER THE COMPONENT IS HEALTHY OR DAMAGED — 228

IDENTIFY DAMAGED PORTION — 230

FIG. 5

40

41 LAYER → 42 LAYER → 43 LAYER → 44 LAYER

70

71 LAYER → 72 LAYER → 73 LAYER → 74 LAYER

FIG. 8

125 MULTISPECTRAL TRAINING IMAGE → 40 FIRST NEURAL NETWORK → 162 TRAINING MASK → 165 UPDATED TRAINING MATRIX → 70 SECOND NEURAL NETWORK → 1000 TRAINING ESTIMATE

FIG. 10

FIG. 9

**FIG. 16**

- 500 — APPLY THE FIRST NEURAL NETWORK TO EACH MULTISPECTRAL TRAINING IMAGE
- 502 — CALCULATE SEGMENTATION ERROR CONTRIBUTION
- 504 — APPLY THE SECOND NEURAL NETWORK TO THE TRAINING MASK AND TO THE UPDATED TRAINING MATRIX
- 506 — CALCULATE DECISION ERROR CONTRIBUTION
- 508 — CALCULATE ERROR FUNCTION VALUE
- 510 — UPDATE THE VALUES OF THE PARAMETERS OF THE FIRST AND SECOND NEURAL NETWORKS
- 512 — CALCULATE ESTIMATE OF THE GOODNESS OF THE TRAINING

**FIG. 11**

- 300 — GENERATE REDUCED IMAGES
- 302 — GENERATE BINARY IMAGES
- 304 — GENERATE SMOOTHED IMAGES
- 306 — TRAIN THE FIRST AND SECOND NEURAL NETWORKS BASED ON THE MULTISPECTRAL TRAINING IMAGES, THE CORRESPONDING SMOOTHED IMAGES AND THE CORRESPONDING LABELS

FIG. 12

FIG. 13

FIG. 14

FIG. 15

EP 4 394 693 A1

UPDATE ERROR FUNCTION —600

FORM NEW TRAINING BATCHES —602

ITERATE TRAINING OPERATIONS —604

SELECT THE VALUES OF THE PARAMETERS OF THE FIRST AND SECOND NEURAL NETWORKS —606

FIG. 17

CALCULATE SPECTRAL SIGNATURE OF THE DAMAGED PORTION OF THE COMPONENT —700

IDENTIFY THE MATERIAL —702

SIGNAL THE MATERIAL —704

FIG. 19

FIG. 18

Europäisches
Patentamt

European
Patent Office

Office européen
des brevets

# EUROPEAN SEARCH REPORT

Application Number

EP 22 21 7219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/175669 A1 (BIAN XIAO [US] ET AL) 4 June 2020 (2020-06-04) * paragraph [0041] - paragraph [0090] * * figures 2-9 * | 1-16 | INV. G06T7/00 G06T7/11 ADD. G06N3/084 |
| X | CHEN HANSHEN ET AL: "Pothole detection using location-aware convolutional neural networks", INTERNATIONAL JOURNAL OF MACHINE LEARNING AND CYBERNETICS, SPRINGER BERLIN HEIDELBERG, BERLIN/HEIDELBERG, vol. 11, no. 4, 12 February 2020 (2020-02-12), pages 899-911, XP037053353, ISSN: 1868-8071, DOI: 10.1007/S13042-020-01078-7 [retrieved on 2020-02-12] * 3 * * figures 2-4 * | 1-16 | |
| X | CN 111 325 713 A (ZHEJIANG ADVANCED INSTITUTE OF INFORMATION TECHNOLOGY PEKING UNIV ET A) 23 June 2020 (2020-06-23) * paragraph [0038] - paragraph [0080] * | 1-16 | TECHNICAL FIELDS SEARCHED (IPC) G06T G06N G06V |

The present search report has been drawn up for all claims

| Place of search | Date of completion of the search | Examiner |
|---|---|---|
| Munich | 26 June 2023 | Gitzenis, Savvas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 7219

26-06-2023

| Patent document cited in search report | | Publication date | Patent family member(s) | | Publication date |
|---|---|---|---|---|---|
| US 2020175669 | A1 | 04-06-2020 | CA | 3062044 A1 | 04-06-2020 |
| | | | CN | 111272763 A | 12-06-2020 |
| | | | EP | 3664023 A1 | 10-06-2020 |
| | | | US | 2020175669 A1 | 04-06-2020 |
| CN 111325713 | A | 23-06-2020 | NONE | | |